# EUROPÄISCHE PATENTSCHRIFT

(11) **EP 2 517 946 B1**
(45) Veröffentlichungstag und Bekanntmachung des Hinweises auf die Patenterteilung: **18.02.2015**
(21) Anmeldenummer: 12002807.1
(22) Anmeldetag: 21.04.2012
(51) Int. Cl.: B62D 3/12, F16H 55/18, F16H 55/28

(54) **Zahnstangen-Lenkgetriebe für ein Fahrzeug**
Rack-and-pinion steering gear for a vehicle
Mécanisme de direction à crémaillère pour un véhicule

(30) Priorität: 26.04.2011 DE 102011018568
(43) Veröffentlichungstag der Anmeldung: 31.10.2012
(73) Patentinhaber: Audi AG, 85045 Ingolstadt (DE)
(72) Erfinder: Michel, Wilfried, 93339 Riedenburg (DE)
(74) Vertreter: Asch, Konrad

(56) Entgegenhaltungen:
- DE-C- 596 082
- US-A- 3 020 775
- US-A- 3 138 035

## Beschreibung

Die Erfindung betrifft ein Zahnstangen-Lenkgetriebe für ein Fahrzeug nach dem Oberbegriff des Patentanspruches 1.

Um ein präzises Fahren sowie eine gute Fahrbahnrückmeldung zu gewährleisten, ist es bei einer Zahnstangen-Lenkung von großer Bedeutung, dass die fahrerseitige Lenkbewegung mit geringstem Spiel sowie mit möglichst niedriger Reibung in eine Lenkbewegung der gelenkten Fahrzeugräder umgewandelt wird.

Aus der DE 10 2006 061 501 A1 ist eine solche Zahnstangen-Lenkung bekannt, bei der das Lenkgetriebe eine, in einem Getriebegehäuse linear beweglich geführte Zahnstange und ein drehbar gelagertes Lenkritzel aufweist, das mit der Zahnstange in Zahneingriff ist. Bei einer Lenkbewegung des Fahrers wird zunächst eine Eingangswelle in der Lenksäule betätigt. Der mechanische Kraftfluss führt von der Eingangswelle weiter über eine Antriebswelle zum Lenkritzel. Von dort wird über den Zahneingriff mit der Zahnstange die Lenkraddrehbewegung in eine Linearbewegung der Zahnstange umgewandelt. An der Zahnstange sind Spurstangen angelenkt, mit deren Hilfe die gelenkten Räder um einen Einschlagwinkel verstellt werden.

Um in der Verzahnung der Lenkritzel/Zahnstangen-Paarung eine Spielfreiheit zu erreichen, kommt bei der DE 10 2006 061 501 A1 ein Druckstück zum Einsatz, das mittels einer Feder vorgespannt ist und auf die, dem Zahneingriff gegenüberliegenden Seite gegen den Rücken der Zahnstange gepresst wird. Das Druckstück ist in der Regel hinsichtlich der Anpresskraft bei der Erstmontage einstellbar sowie gegebenenfalls später auch nachstellbar, und ortsfest im Lenkgehäuse gelagert. Auf diese Weise wird eine definierte Kraft auf die Verzahnung ausgeübt, damit ein Verzahnungsspiel zwischen dem Lenkritzel und der Zahnstange ausgeschlossen ist.

Mit Hilfe des Druckstückes wird also die Zahnstange gegen das Lenkritzel gedrückt, um damit das Verzahnungsspiel zu beseitigen. Dadurch wird zwangsläufig die Zahnstangen-Achse aus ihrer Nulllage ausgelenkt. Dies kann zu einer nicht unerheblichen Verzwängung (Schiefstellung) der Zahnstange führen, wodurch in sämtlichen Zahnstangen-Führungen Reibung erzeugt wird, was in der Folge einen erhöhten Verschleiß bedeutet. Zudem wird auch an den Kontaktflächen zwischen dem Druckstück und dem Zahnstangen-Rücken zusätzlich eine hohe Verlustreibung erzeugt. Andererseits ist jedoch das Druckstück nicht in der Lage, die Funktion einer Zahnstangenführung zu übernehmen, da die Federkraft des Druckstückes nicht ausreichend groß ist, um in Richtung der Druckstück-Feder wirkende Reaktionskräfte ohne eine elastische Rückstellung aufnehmen zu können. Das heißt, dass am geometrischen Ort des Druckstückes keine steife Zahnstangenführung im Lenkgetriebe bereitgestellt ist, so dass die Zahnstange gewissermaßen fliegend im Lenkgehäuse gelagert ist.

Aus der DE 596 082 C ist ein gattungsgemäßes Zahnstangen-Lenkgetriebe bekannt, bei dem das Lenkritzel in zwei zueinander verdrehbar gelagerte Ritzelteile aufgeteilt ist, wobei die beiden Ritzelteile in entgegengesetzte Drehrichtungen vorspannbar sind.

Die Aufgabe der Erfindung besteht darin, ein Zahnstangen-Lenkgetriebe für eine Zahnstangenlenkung eines Fahrzeuges bereitzustellen, bei der ein spielfreier Zahneingriff zwischen dem Lenkritzel und der Zahnstange gewährleistet ist.

Die Aufgabe ist durch die Merkmale des Patentanspruches 1 gelöst. Bevorzugte Weiterbildungen der Erfindung sind in den abhängigen Ansprüchen offenbart.

Die Erfindung beruht auf dem Gedanken, dass aufgrund der vom Druckstück auf die Zahnstange ausgeübte Anpresskraft die Linearbewegung der Zahnstange im Lenkbetrieb in hohem Maße reibungsbehaftet ist und zudem einem Materialverschleiß ausgesetzt ist. Erfindungsgemäß wird daher auf den Einsatz eines solchen Druckstückes verzichtet und das Lenkritzel in zwei zueinander verdrehbar gelagerte Ritzelteile aufgeteilt. Die beiden Ritzelteile des Lenkritzels sind in den Zahnlücken der Zahnstange mittels einer Federkraft jeweils auf einander gegenüberliegende Zahnflanken der Zahnstange vorspannbar. Dadurch wird das Verzahnungsspiel der Lenkritzel/Zahnstangen-Paarung unmittelbar am Entstehungsort, nämlich zwischen den Zahnflanken selbst, beseitigt, ohne dass die Zahnstange als solche mit Federkraft beaufschlagt wird. Die Zahnstange an sich bleibt im Unterschied zum Stand der Technik daher im Wesentlichen unberüht. Durch den Entfall des Druckstückes ist es zudem möglich, im Bereich des Zahneingriffes eine übliche Wellenlagerung eine Zahnstangenführung unterzubringen, wodurch eine oben erwähnte fliegende Lagerung der Zahnstange verhindert werden kann.

Von den beiden Ritzelteilen des Lenkritzels kann das erste Ritzelteil von der Antriebswelle getragen sein, die über eine Eingangswelle mit dem Lenkrad des Fahrzeuges trieblich verbunden ist. Das erste Ritzelteil entspricht somit dem ebenfalls auf der Antriebswelle getragenen Lenkritzel gemäß dem oben genannten Stand der Technik. Zusätzlich dazu kann erfindungsgemäß das zweite Ritzelteil koaxial zum ersten Ritzelteil drehgelagert sein, und zwar insbesondere über einen Lagerzapfen, der in einer stirnseitigen Lagerausnehmung der Antriebswelle drehgelagert ist.

Zwischen dem ersten Ritzelteil und dem zweiten Ritzelteil des Antriebsritzels ist funktionell ein Federelement geschaltet, mit dem die beiden Ritzelteile in entgegengesetzte Drehrichtungen an jeweils gegenüberliegende Zahnflanken von Zahnlücken der Zahnstange vorgespannt werden können.

Erfindungsgemäß ist das Federelement ein Torsionsstab, der sich in der Axialrichtung an das zweite Antriebsritzel anschließt. Mit dem Torsionsstab kann das zweite Ritzelteil gegenüber dem ersten Ritzelteil mit einem Torsionsmoment beaufschlagt werden. Hierzu kann sich der Torsionsstab bauraumgünstig radial innen durch die als Hohlwelle ausgeführte Antriebswelle erstrecken. Die Antriebswelle und der Torsionsstab können bevorzugt an der, dem Lenkritzel axial gegenüberliegenden Stirnseite lösbar drehfest miteinander verbunden sein, und zwar über eine lösbare Formschlussverbindung beispielsweise über lösbare Kerbverzahnungen. Zum Lösen dieser Kerbverzahnungen ist erfindungsgemäß zwischen einer antriebswellenseitigen Kerbverzahnung und einer torsionsstabseitigen Kerbverzahnung ein Riegelelement, insbesondere ein axial verstellbarer Schiebering, vorgesehen sein. Dieser kann in einer Ruhelage den Torsionsstab drehfest mit der Antriebswelle verbinden, während in einer Freigabestellung der Torsionsstab mit Bezug auf die Antriebswelle unter Aufbau eines Torsionsmomentes tordierbar ist. In der Ruhelage des Schieberings ergibt sich somit, dass der Torsionsstab zwischen der Verzahnung der Zahnstange und der lösbaren Formschlussverbindung mit einem Torsionsmoment eingespannt ist. Bei gelöster Formschlussverbindung können durch ein Aufziehen des Torsionsstabes die beiden Ritzelteile des Lenkritzels gegeneinander in den Zahnlücken der Zahnstange verspannt werden.

Erfindungsgemäß ist der Torsionsstab zwischen der Verzahnung der Zahnstange und der in Axialrichtung gegenüberliegenden lösbaren Formschlussverbindung eingespannt. Das heißt, dass bei von der Zahnstange demontiertem Antriebsritzel die beiden Ritzelteile zueinander spannungsfrei sind. Erst nach erfolgtem Zusammenbau des Antriebsritzels mit der Zahnstange kann zwischen den beiden Ritzelteilen ein Torsionsmoment aufgebaut werden.

Mit dem erfindungsgemäßen Verspannen der beiden Ritzelteile ergibt sich eine beträchtliche Reibungsreduzierung im Lenkbetrieb. Zudem kann eine Stickslipfreie Führung der Zahnstange erreicht werden. Eine Selbstnachstellung kann, falls erforderlich, ohne jegliche Reibungseinflüsse einfach durch das stetige Anstellmoment aus der Torsionsfeder bewerkstelligt werden. Zudem ist eine Nachstellung im montierten Zustand von außen möglich, und zwar ohne Demontage des Lenkritzels aus dem Lenkgehäuse.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer perspektivischen Prinzipdarstellung ein eine erfindungsgemäße Zahnstangenlenkung mit einem Lenkgetriebe;
- Fig. 2: in einer Seitenschnittdarstellung die Zahnstange mit damit in Zahneingriff befindlicher Antriebswelle;
- Fig. 3: den Zahneingriff zwischen dem Lenkritzel und der Zahnstange in einer Detailansicht;
- Fig. 4 und 5: jeweils Ansichten, mit deren Hilfe die Einstellung des zwischen den beiden Ritzelteilen wirkenden Torsionsmomentes veranschaulicht ist; sowie
- Fig. 6 und 7: jeweils Ansichten, die den Zusammenbau der erfindungsgemäßen Antriebswelle veranschaulichen.

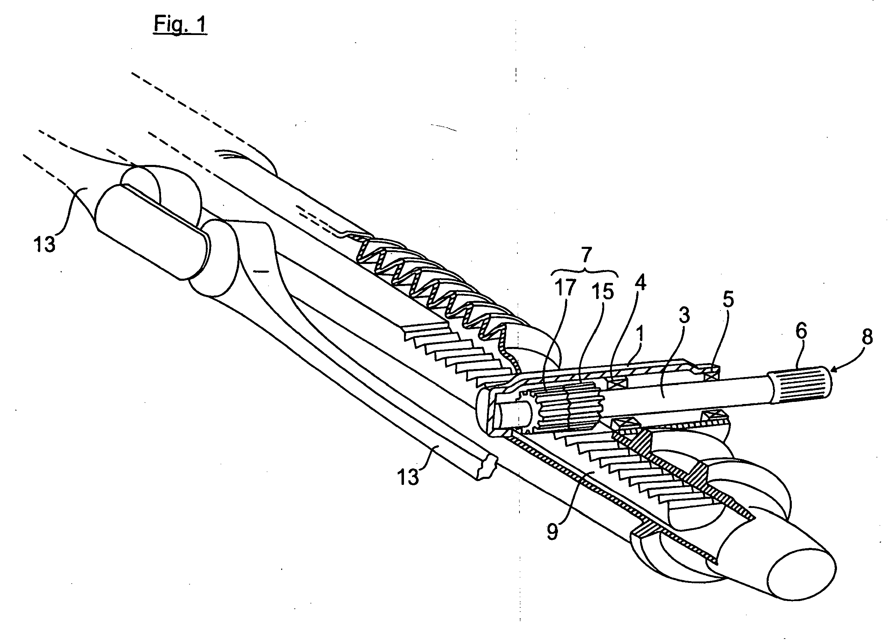

In der Fig. 1 ist grob schematisch ein Zahnstangenlenkgetriebe für eine Zahnstangenlenkung eines Fahrzeuges gezeigt. Die Zahnstangenlenkung kann in an sich bekannter Weise mit einer Servo-Unterstützung arbeiten, die jedoch für die Erläuterung der Erfindung ohne Belang ist und daher nicht näher beschrieben wird. Gemäß der Fig. 1 weist das Getriebegehäuse 1 des Lenkgetriebes eine Antriebswelle 3 auf, die über zwei steife Wälzlager 4, 5 im Getriebegehäuse 1 gelagert ist. Die Antriebswelle 3 ist mit einem Ende 6 aus dem Getriebegehäuse 1 herausgeführt, das als Lenksäulenanschluss über eine Lenksäule mit dem Lenkrad des Fahrzeuges trieblich verbunden ist. Am axial gegenüberliegenden Ende weist die Antriebswelle 3 ein Lenkritzel 7 auf, das mit einer linear bewegbar im Lenkgetriebegehäuse 1 geführten Zahnstange 9 in Zahneingriff ist. Die Zahnstange 9 ist über nur angedeutete Gelenke mit Spurstangen 13 bewegungsgekoppelt, die zu nicht dargestellten Radführungselementen der gelenkten Fahrzeugräder geführt sind. In bekannter Weise führt der mechanische Kraftfluss bei einer Lenkbewegung des Fahrers ausgehend von der Lenksäule über die Antriebswelle 3 zum Lenkritzel 7. Von dort wird über den Zahneingriff mit der Zahnstange 9 die Lenkraddrehbewegung in eine Linearbewegung der Zahnstange 9 umgewandelt.

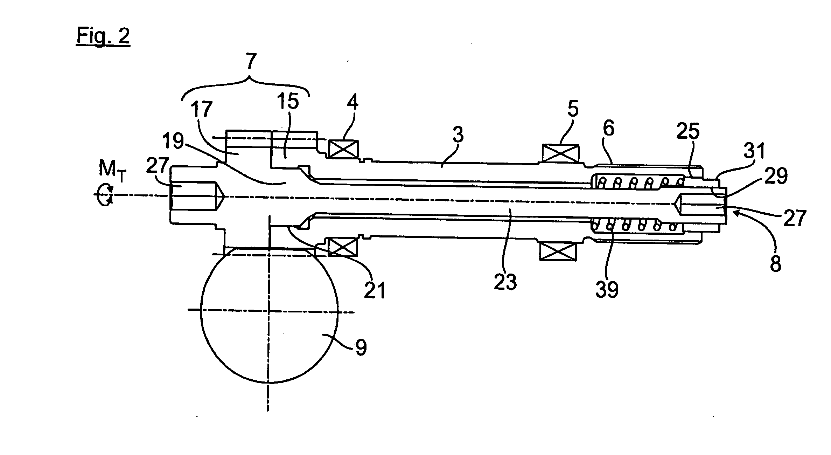

In der Fig. 2 ist die Antriebswelle 3 mit dem Lenkritzel 7 in vergrößerter Schnittdarstellung gezeigt. Demzufolge ist das Lenkritzel 7 in zwei zueinander verdrehbaren Ritzelhälften 15, 17 aufgeteilt. Die erste Ritzelhälfte 15 ist stirnseitig von der Antriebswelle 3 getragen, die in der Fig. 2 als Hohlwelle bzw. als Antriebsschaft ausgeführt ist. Die zweite Ritzelhälfte 17 des Lenkritzels 7 ist demgegenüber mit einem Lagerzapfen 19 in einer hohlzylindrischen Lagerausnehmung 21 an der Stirnseite der Antriebswelle 3 drehgelagert.

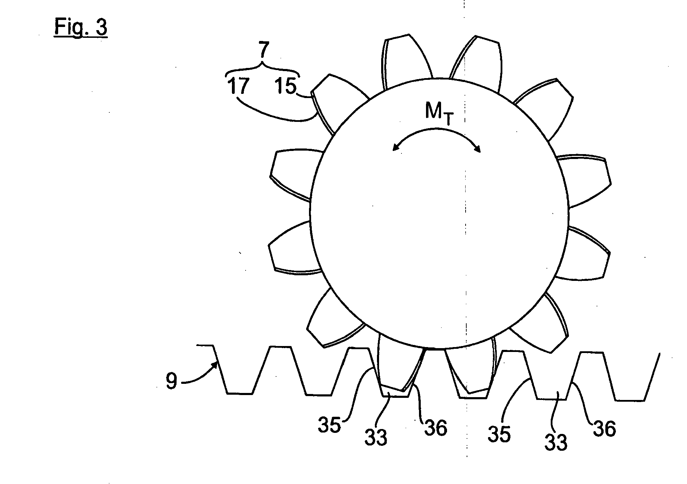

Der Lagerzapfen 19 der zweiten Ritzelhälfte 17 ist mit einem Torsionsstab 23 reduzierten Durchmessers in Axialrichtung verlängert, der radial innen durch die Antriebswelle 3 bis zur gegenüberliegenden Stirnseite 8 der Antriebswelle 3 geführt ist. An der, dem Zahneingriff gegenüberliegenden Stirnseite 8 weist die Antriebswelle 3 radial außen eine Kerbverzahnung für den Lenksäulenanschluss 6 sowie radial innen eine Kerbverzahnung 25 auf, die über einen Schiebering 31 kraftübertragend mit einer Außenverzahnung 29 des Torsionsstabes 23 verbunden ist. An beiden axial gegenüberliegenden Stirnseiten des Torsionsstabes 23 sind Innenprofile 27 eingearbeitet, die als Kraftangriffspunkte zum Verspannen der beiden Ritzelhälften 15, 17 dienen. In der, in der Fig. 2 gezeigten Einbausituation sind daher der Torsionsstab 23 und die Antriebswelle 3 jeweils an beiden Stirnseiten über den Zahneingriff mit der Zahnstange 9 und über die Kerbverzahnungen 25, 29 drehfest miteinander verbunden. Die sich zwischen dem Lagerzapfen 19 der zweiten Ritzelhälfte 17 und der Außenverzahnung 29 erstreckende freie Stablänge bildet eine wirksame Federlänge über die der Torsionsstab 23 unter Aufbau eines Torsionsmomentes M_{T} (Fig. 2) tordiert werden kann. Aufgrund des Torsionsmomentes M_{T} sind gemäß der Fig. 3 die Zähne der beiden Ritzelhälften 15, 17, die sich in Zahneingriff mit korrespondierenden Zahnlücken 33 der Zahnstange 9 befinden, jeweils auf einander gegenüberliegende Zahnflanken 35, 36 der Zahnstange 9 vorgespannt. Dadurch drücken die Ritzelzähne der beiden Ritzelhälften 15, 17 in entgegengesetzten Drehrichtungen jeweils gegen die gegenüberliegenden Zahnflanken 35, 36, wodurch ein Verzahnungsspiel unterbunden wird.

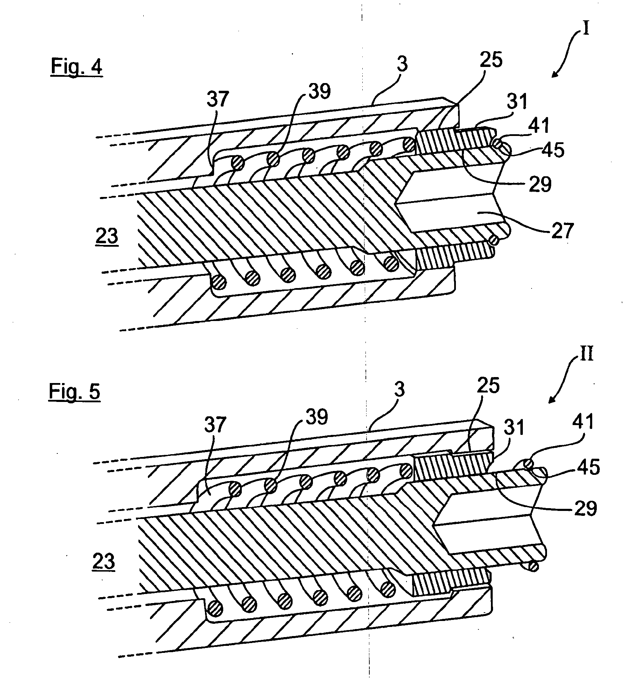

Die Einstellung des zwischen den beiden Ritzelhälften 15, 17 wirkenden Torsionsmomentes M_{T} ist nachfolgend anhand der Fig. 4 und 5 erläutert. So ist in der Fig. 4 der zwischen der Innenverzahnung 25 der Antriebswelle 3 und der Außenverzahnung 29 des Torsionsstabes 23 angeordnete Schiebering 31 in einer Ruhelage I dargestellt. In der Ruhelage I ist der Schiebering 31 über Innen- und Außenverzahnungen jeweils drehfest, das heißt kraftübertragend mit der Antriebswelle 3 und dem Torsionsstab 23 verbunden. Zudem ist zwischen dem Schiebering 31 und einer inneren Ringschulter 37 der Antriebswelle 3 eine Druckfeder 39 abgestützt, die den Schiebering 31 gegen einen Axialanschlag 41 des Torsionsstabes 23 in die Ruhelage I vorspannt. Zum Einstellen eines Torsionsmomentes M_{T} zwischen den beiden Ritzelhälften 15, 17 wird der Schiebering 31 gegen die Federkraft der Druckfeder 39 in die hohle Antriebswelle 3 in etwa bündig mit deren Stirnseite 8 eingedrückt. Dadurch gibt der Schiebering 31 die Innenverzahnung 25 der Antriebswelle 3 frei. Anschließend kann durch einen nicht dargestellten Kraftangriff am Innenprofil 27 des Torsionsstabes 23 das stirnseitige Ende des Torsionsstabes 23 unter Aufbau des Torsionsmomentes M_{T} verdreht werden, wodurch sich eine gewünschte Vorspannung der sich in Zahneingriff mit der Zahnstange 9 befindlichen Ritzelhälften 15, 17 ergibt. Durch Loslassen des Schieberings 31 wird dieser aufgrund der Druckfeder 39 wieder in seine Ruhelage I zurückgeschoben. Auf diese Weise kann ein beliebiges Torsionsmoment M_{T} eingestellt werden, wobei die einstellbaren Torsionsmomente durch die Teilung der Kerbverzahnungen zwischen dem Schiebering 31 und der Antriebswelle 3 vorgegeben werden.

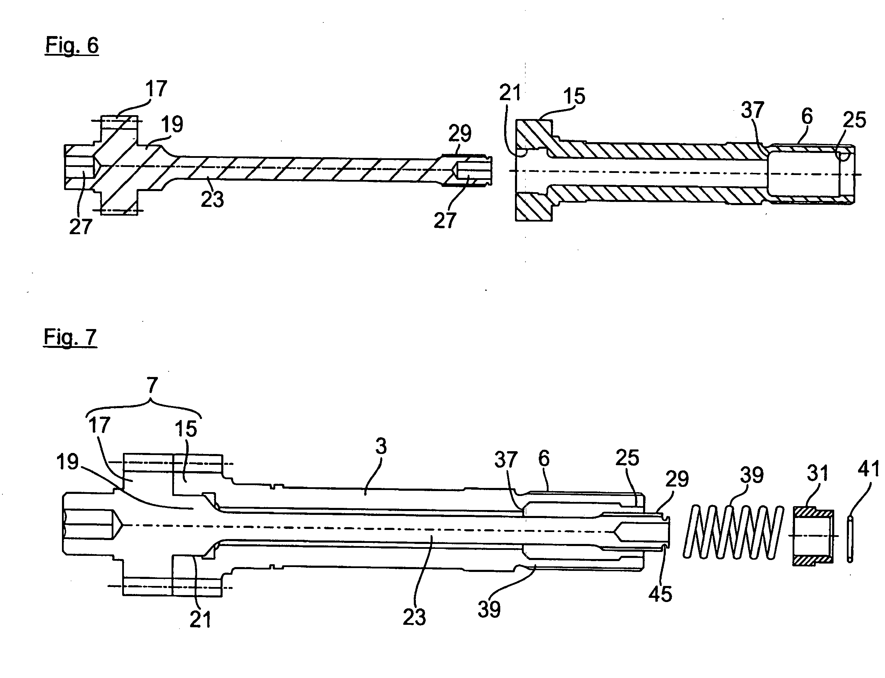

In den nachfolgenden Fig. 6 und 7 ist der Zusammenbau der erfindungsgemäßen Antriebswelle 3 gezeigt. Zunächst wird in der Fig. 6 der Torsionsstab 23 der zweiten Ritzelhälfte 17 in das Hohlprofil der Antriebswelle 3 geschoben. Anschließend wird gemäß der Fig. 7 die Druckfeder 39 von der, dem Lenkritzel 7 gegenüberliegenden Stirnseite in die Antriebswelle 3 eingesetzt. Darauffolgend wird der Schiebering 31 in den verbleibenden Ringspalt zwischen der Antriebswelle 3 und dem Torsionsstab 23 geschoben, und zwar unter Aufbau einer elastisch nachgiebigen Rückstellkraft durch die Druckfeder 39. In einem weiteren Montageschritt wird ein Drahtring 41 aufgeweitet und in eine Ringnut 45 des Torsionsstabes 23 eingeschnappt. Der Drahtring 41 bildet in der Einbaulage den Axialanschlag, gegen den der Schiebering 31 in der Ruhelage I gedrückt ist.

## Patentansprüche

1. Zahnstangen-Lenkgetriebe für eine Zahnstangenlenkung eines Fahrzeugs mit einer in einem Gehäuse (1) geführten Zahnstange (9) und einem drehbar gelagerten Lenkritzel (7), das mit der Zahnstange (9) in Zahneingriff ist, wobei das Lenkritzel (7) in zwei zueinander verdrehbar gelagerte Ritzelteile (15, 17), insbesondere Halbritzel, aufgeteilt ist, die in den Zahnlücken (33) der Zahnstange (9) mittels einer Federkraft jeweils auf einander gegenüberliegende Zahnflanken (35, 36) der Verzahnung der Zahnstange (9) vorspannbar sind, wobei zwischen dem ersten und dem zweiten Ritzelteil (15, 17) des Lenkritzels (7) ein Federelement (23) geschaltet ist, mit dem die beiden Ritzelteile (15, 17) in entgegengesetzte Drehrichtungen vorspannbar sind, und das Federelement (23) ein Torsionsstab ist, der sich in der Axialrichtung an das zweite Ritzelteil (17) anschließt und mit dem das zweite Ritzelteil (17) mit einem Torsionsmoment (M_{T}) beaufschlagbar ist, wobei die Antriebswelle (3) und der Torsionsstab (23), insbesondere an einer dem Lenkritzel (7) gegenüberliegenden Stirnseite, über eine lösbare Formschlussverbindung (25, 29) miteinander drehfest verbindbar sind, **dadurch gekennzeichnet, dass** zum Lösen der Formschlussverbindung (25, 29) ein Riegelelement (31), insbesondere ein Schiebering, vorgesehen ist, der in einer Ruhelage (I) die Formschlussverbindung (25, 29) sichert und in einer Freigabestellung (II) die Formschlussverbindung (25, 29) löst.

2. Zahnstangen-Lenkgetriebe nach Anspruch 1, **dadurch gekennzeichnet, dass** das erste Ritzelteil (15) von einer Antriebswelle (3) getragen ist, die insbesondere über eine Lenksäule mit dem Lenkrad des Fahrzeugs trieblich verbunden ist.

3. Zahnstangen-Lenkgetriebe nach Anspruch 2, **dadurch gekennzeichnet, dass** das zweite Ritzelteil (17) koaxial zum ersten Ritzelteil (15) drehgelagert ist, insbesondere über einen Lagerzapfen (19) in einer stirnseitigen Lagerausnehmung (21) der Antriebswelle (3).

4. Zahnstangen-Lenkgetriebe nach Anspruch 1, 2 oder 3, **dadurch gekennzeichnet, dass** der Torsionsstab (23) radial innen durch die hohle Antriebswelle (3) geführt ist.

5. Zahnstangen-Lenkgetriebe nach einem der vorhergehenden Ansprüche, **dadurch gekennzeichnet, dass** der Torsionsstab (23) zwischen der Verzahnung der Zahnstange (9) und der lösbaren Formschlussverbindung (25, 29) unter Aufbau des Torsionsmoments (M_{T}) einspannbar ist.

6. Zahnstangen-Lenkgetriebe nach einem der vorhergehenden Ansprüche, **dadurch gekennzeichnet, dass** bei von der Zahnstange demontiertem Antriebsritzel (7) die beiden Ritzelteile (15, 17) zueinander spannungsfrei sind, und dass ein Vorspannen des Torsionsstabes (23) erst nach dem Zusammenbau des Antriebsritzels (7) mit der Zahnstange (9) erfolgt.

7. Zahnstangen-Lenkgetriebe nach einem der vorhergehenden Ansprüche, **dadurch gekennzeichnet, dass** die dem Antriebsritzel (7) gegenüberliegende Stirnseite der Antriebswelle (3) außerhalb des Getriebegehäuses (1) angeordnet ist, und/oder an der Stirnseite der Antriebswelle (3) ein von außen zugänglicher Werkzeugansatz, insbesondere ein Innensechskantprofil, im Torsionsstab (23) ausgebildet ist.

8. Zahnstangen-Lenkgetriebe nach einem der Ansprüche 5 bis 7, **dadurch gekennzeichnet, dass** der insbesondere axial verstellbarer Schiebering (31) zwischen einer antriebswellenseitigen Kerbverzahnung (25) und einer torsionsstabseitigen Kerbverzahnung (29) angeordnet ist, und in der Ruhelage (I) den Torsionsstab (23) drehfest mit der Antriebswelle (3) verbindet sowie in der Freigabestellung (II) ein Verdrehen des Torsionsstabes (23) mit Bezug auf die Antriebswelle (3) ermöglicht.

9. Zahnstangen-Lenkgetriebe nach einem der Ansprüche 5 bis 8, **dadurch gekennzeichnet, dass** der Schiebering (31) mittels eines Federelements (39) in die Ruhelage (I) vorgespannt ist.

## Claims

1. Rack-and-pinion-steering gear for a rack-and-pinion-steering system of a vehicle, having a rack (9) guided in a housing (1) and a rotatably mounted steering pinion (7) which is in toothed engagement with the rack (9), the steering pinion (7) being divided into two pinion parts (15, 17), in particular half pinions, which are mounted so as to be rotatable relative to one another and can be respectively pre-loaded in the tooth spaces (33) of the rack (9) by means of a resilient force on opposing tooth profiles (35, 36) of the toothing of the rack (9), a spring element (23) being connected between the first and the second pinion part (15, 17) of the steering pinion (7), by means of which spring element the two pinion parts (15, 17) can be pre-loaded in opposing rotational directions, and the spring element (23) being a torsion bar which is connected in the axial direction to the second pinion part (17) and by means of which a torsional moment (M_{T}) can be applied to the second pinion part (17), the actuator (3) and the torsion bar (23), in particular on an end face opposite the steering pinion (7), being able to be rotationally interconnected via a releasable interlocking connection (25, 29),**characterised in that**, for releasing the interlocking connection (25, 29), a locking element (31), in particular a sliding ring, is provided which, in a rest position (I), secures the interlocking connection (25, 29) and, in a release position (II), releases the interlocking connection (25, 29).

2. Rack-and-pinion steering gear according to claim 1, **characterised in that** the first pinion part (15) is carried on an actuator (3) which is connected for driving to the steering wheel of the vehicle, in particular connected by a steering column.

3. Rack-and-pinion steering gear according to claim 2, **characterised in that** the second pinion part (17) is mounted for rotation coaxially with respect to the first pinion part (15), in particular by means of a bearing pin (19) in an end-face bearing recess (21) of the actuator (3).

4. Rack-and-pinion steering gear according to any of claims 1 to 3, **characterised in that** the torsion bar (23) is guided radially inwardly through the hollow actuator (3).

5. Rack-and-pinion steering gear according to any of the preceding claims, **characterised in that** the torsion bar (23) can be clamped between the toothing of the rack (9) and the releasable interlocking connection (25, 29) during a buildup of torsional moment (M_{T}).

6. Rack-and-pinion steering gear according to any of the preceding claims, **characterised in that** when the drive pinion (7) has been removed from the rack, the two pinion parts (15, 17) are mutually without stresses, and **in that** pretensioning of the torsion bar (23) using the rack (9) is carried out only after assembling the drive pinion (7).

7. Rack-and-pinion steering gear according to any of the preceding claims, **characterised in that** the end face of the actuator (3) opposite the drive pinion (7) is arranged outside the gear housing (1), and/or a tool attachment, in particular an internally hexagonal shape, which is accessible from the outside, is formed on the end face of the actuator (3) in the torsion bar (23).

8. Rack-and-pinion steering gear according to any of claims 5 to 7, **characterised in that** the sliding ring (31), which is in particular axially displaceable, is arranged between an actuator-side serration (25) and a torsion-bar-side serration (29) and, in the rest position (I), rotationally engages the torsion bar (23) with the actuator (3) and, in the release position (II), enables the torsion bar (23) to rotate relative to the actuator (3).

9. Rack-and-pinion steering gear according to any of claims 5 to 8, **characterised in that**, in the rest position (I), the sliding ring (31) is preloaded by a spring element (39).

## Revendications

1. Mécanisme de direction à crémaillère pour une direction à crémaillère d'un véhicule automobile, comprenant une crémaillère (9) guidée dans un boîtier (1) et un pignon de direction (7) monté à rotation, qui est en prise dentée avec la crémaillère (9), dans lequel le pignon de direction (7) est divisé en deux parties de pignon (15, 17) montées à rotation l'une sur l'autre, en particulier deux demi-pignons, qui peuvent être précontraints dans les entredents (33) de la crémaillère (9) au moyen d'une force élastique appliquée respectivement sur des flancs de dents (35, 36), en regard l'un de l'autre, de la denture de la crémaillère (9), dans lequel est inséré entre la première et la seconde partie (15, 17) du pignon de direction (7) un élément à ressort (23), avec lequel les deux parties de pignon (15, 17) peuvent être précontraints dans des sens de rotation opposés et l'élément à ressort (23) est une tige de torsion qui se raccorde à la seconde partie de pignon (17) dans la direction axiale et par laquelle la seconde partie de pignon (17) peut être sollicitée par un moment de torsion (M_{T}), dans lequel l'arbre de commande (3) et la tige de torsion (23) peuvent être reliés l'un avec l'autre solidaires en rotation en particulier sur une face avant en regard du pignon de direction (7), via une liaison de fermeture mécanique libérable (25, 29), **caractérisé en ce qu'**il est prévu pour libérer la liaison de fermeture mécanique (25, 29) un élément de verrouillage (31), en particulier un anneau curseur, qui fixe la liaison de fermeture mécanique (25, 29) en position de repos (I) et libère la liaison de fermeture mécanique (25, 29) en position de libération (II).

2. Mécanisme de direction à crémaillère selon la revendication 1, **caractérisé en ce que** la première partie de pignon (15) est portée par un arbre de commande (3), qui est en particulier reliée en coopération via une colonne de direction avec le volant de direction du véhicule.

3. Mécanisme de direction à crémaillère selon la revendication 2, **caractérisé en ce que** la seconde partie de pignon (17) est montée à rotation coaxialement avec la première partie de pignon (15), en particulier via un tourillon (19) dans une cavité de palier frontale (21) de l'arbre de commande (3) .

4. Mécanisme de direction à crémaillère selon la revendication 1, 2 ou 3, **caractérisé en ce que** la tige de torsion (23) est guidée radialement à l'intérieur par l'arbre de commande creux (3).

5. Mécanisme de direction à crémaillère selon l'une quelconque des revendications précédentes, **caractérisé en ce que** la tige de torsion (23) peut être bloquée entre la denture de la crémaillère (9) et la liaison de fermeture mécanique libérable (25, 29) sous la contrainte du moment de torsion (M_{T}).

6. Mécanisme de direction à crémaillère selon l'une quelconque des revendications précédentes, **caractérisé en ce que**, lorsque le pignon d'entraînement (7) est démonté de la crémaillère, les deux parties de pignon (15, 17) ne sont pas sous tension mutuelle et **en ce qu'**une précontrainte de la tige de torsion (23) ne se produit qu'après l'assemblage du pignon d'entraînement (7) avec la crémaillère (9).

7. Mécanisme de direction à crémaillère selon l'une quelconque des revendications précédentes, **caractérisé en ce que** la face avant de l'arbre de commande (3) en regard du pignon d'entraînement (7) est aménagé à l'extérieur du boîtier d'engrenages (1) et/ou est aménagée sur la face avant de l'arbre de commande (3) une pièce rapportée d'outil accessible de l'extérieur, en particulier un profil à six pans creux, dans la tige de torsion (23).

8. Mécanisme de direction à crémaillère selon l'une quelconque des revendications 5 à 7, **caractérisé en ce que** l'anneau curseur (31) en particulier déplaçable axialement est aménagé entre une denture cannelée côté arbre de commande (25) et une denture cannelée côté tige de torsion (29) et relie, en position de repos (I), de manière solidaire en rotation la tige de torsion (23) à l'arbre de commande (3) tout en permettant, en position de libération (II), une torsion de la tige de torsion (23) par rapport à l'arbre de commande (3).

9. Mécanisme de direction à crémaillère selon l'une quelconque des revendications 5 à 8, **caractérisé en ce que** l'anneau curseur (31) est précontraint en position de repos (I) au moyen d'un élément à ressort (39).
